# EUROPEAN PATENT APPLICATION

(11) **EP 2 248 875 A1**
(43) Date of publication of application: **10.11.2010**
(21) Application number: 09714604.7
(22) Date of filing: 24.02.2009
(51) Int. Cl.: C10L 3/10, C01B 3/38, H01M 8/06

(54) **DESULFURIZER, HYDROGEN GENERATION APPARATUS, FUEL CELL POWER GENERATING SYSTEM, AND DESULFURIZING AGENT CARTRIDGE**

(30) Priority: 26.02.2008 JP 2008044200
(71) Applicant: Panasonic Corporation, Kadoma-shi Osaka 571-8501 (JP)
(72) Inventor: UKAI, Kunihiro, Osaka 540-6207 (JP); KANI, Yukimune, Osaka 540-6207 (JP)
(74) Representative: Grünecker, Kinkeldey, Stockmair & Schwanhäusser Anwaltssozietät
(86) International application number: PCT/JP2009/000794
(87) International publication number: WO 2009/107362

(57) **Abstract**

A desulfurizer is provided, which enables more easy replacement of a desulfurizing agent, and enables suppressing degradation of a desulfurizing agent during replacement.

A desulfurizer includes an outer container 201 having an outer-container inlet 203 and an outer-container outlet 204, and an inner container 208 that has a desulfurizing section 221 filled with a desulfurizing agent 209 removing an odor component in material, and is removably disposed in the outer container 201, wherein the inner container 208 has an inner-container inlet 211 communicated to the outer-container inlet 203, an inner-container outlet 212 communicated to the outer-container outlet 204, and seal members 218 provided in the inner-container inlet 211 and the inner-container outlet 212 respectively, and when the inner container 208 is disposed in the outer container 201, each of the seal members 218 is deformed by an effect of each of the outer-container inlet 203 and the outer-container outlet 204, so that communication is made between the outer-container inlet 203 and the inner-container inlet 211, and between the inner-container outlet 212 and the outer-container outlet 204.

## Description

### Technical Field

The present disclosure relates to a desulfurizer that removes a sulfur component from fossil material and the like, a hydrogen generator having the desulfurizer, a fuel cell generation system having the desulfurizer, and a desulfurizing agent cartridge.

### Background Art

A fuel cell generation system is a system where hydrogen-containing gas and oxygen-containing gas are supplied to a fuel cell stack (hereinafter, called "fuel cell") being a body of an electricity generation section, and chemical energy is generated through an electrochemical reaction of hydrogen with oxygen, and electricity is generated by using the chemical energy as electric energy. In addition, the fuel cell generation system may efficiently generate electricity, and furthermore, may easily extract thermal energy produced during electricity generation operation. Therefore, the system is now actively developed as a distributed generation system that may achieve high energy-use efficiency.

Generally, hydrogen-containing gas is not supplied from infrastructure. Thus, prior art fuel cell generation systems have been provided with a hydrogen generator having a reforming section that uses, as a material, city gas, LPG or the like supplied from an existing infrastructure, and uses an Ru catalyst or an Ni catalyst to induce a reforming reaction of the material with steam at a temperature of 550°C to 750°C so that hydrogen-containing gas is produced.

Typically, material supplied from infrastructure is added with a sulfur compound odorant such as tertially-butylmercaptan (hereinafter, called TBM) or Dimethyl sulfide (hereinafter, called DMS) in order to easily notice leakage of the material from the infrastructure, and leakage of the material from a device using the material. Moreover, the material sometimes contains a slight amount of sulfur compounds such as thiophenes. However, such sulfur compounds may be components causing poisoning of the Ru or Ni catalyst used for the reforming section producing the hydrogen-containing gas. Thus, a desulfurizer, which removes the sulfur compounds in the material before the material is introduced into the reforming section, is often combined with the reforming section.

The desulfurizer includes an adsorption desulfurizer using an adsorbent that adsorbs and removes sulfur compounds, and a hydrodesulfurizer that hydrogenates sulfur compounds into hydrogen disulfide, and removes the hydrogen disulfide. Particularly, the adsorption desulfurizer uses an adsorbent that adsorbs sulfur compounds at normal temperature and thus may remove the sulfur compounds immediately after material has been flowed. Therefore, the adsorption desulfurizer is often used for a distributed generation system being supposed to be frequently started and stopped.

However, since the adsorbent that adsorbs sulfur compounds at normal temperature is small in capacity with respect to adsorbing the sulfur compounds, when a desulfurizer is reduced in size, the desulfurizer is required to be replaced after an appropriate period of use.

Thus, a desulfurizer has been proposed to facilitate replacement of a desulfurizing agent in the desulfurizer, which includes a head body having a connection of gas piping, a case body being removable from the head body, and a desulfurizing agent cartridge that is filled with a desulfurizing agent and loaded into the case body (for example, refer to patent document 1). In the desulfurizing agent cartridge shown in the patent document 1, an opening for inflow of material is formed in a lower part of the cartridge, and an opening for outflow of the material is formed in an upper part thereof.

In a condition where a desulfurizing agent is exposed to the atmosphere, performance of the agent is degraded. Therefore, in a desulfurizing agent cartridge to be carried for replacement, a cover having a pull-tab is provided on the opening in the upper part of the cartridge, and a seal member is attached to the opening in the lower part thereof for sealing the desulfurizing agent. When a desulfurizing agent cartridge is replaced, the pull-tab is pulled, and the seal member is separated, thereby the openings in the upper and lower parts of the desulfurizing agent cartridge are exposed, and then the desulfurizing agent cartridge is inserted into the case body.
Patent document 1: JP-A-2007-84621

### Disclosure of the Invention

### Problems that the Invention Solves

However, in the desulfurizer of the patent document 1, when the desulfurizing agent cartridge is replaced, certain operation has been inconveniently needed, including pulling of the pull-tab of the cartridge, and separation of the seal member.

Moreover, after the openings in the upper and lower parts of the desulfurizing agent cartridge are exposed, it is necessary to perform the operation of inserting the desulfurizing agent cartridge into the case body, and furthermore, connecting the case body to the head body for sealing. Therefore, the desulfurizing agent is exposed to the air for a long time in most cases. If the desulfurizing agent is exposed to the air in such a way, water and the like are adsorbed by the desulfurizing agent, which reduces ability of the desulfurizing agent with regard to adsorbing and removing sulfur compounds.

In consideration of the problem of the prior art desulfurizers, an object of the present disclosure is to provide a desulfurizer that enables more easy replacement of a desulfurizing agent, and enables suppressing degradation of a desulfurizing agent during replacement, a hydrogen generator having the desulfurizer, a fuel cell generation system having the desulfurizer, and a desulfurizing agent cartridge.

### Means for Solving the Problems

The 1^{st} aspect of the present disclosure is a desulfurizer comprising:
an outer container that is provided in a flow path of material, and has an outer-container inlet into which the material flows, and an outer-container outlet from which the material flows out, and
an inner container that has a desulfurizing section filled with a desulfurizing agent for removing an odor component in the material, and the inner container being removably disposed in the outer container,
wherein the inner container has
an inner-container inlet that is communicated to the outer-container inlet, and allows inflow of the material into the desulfurizing section,
an inner-container outlet that is communicated to the outer-container outlet, and allows outflow of the material from the desulfurizing section, and
partition portions provided in the inner-container inlet and the inner-container outlet respectively, and
when the inner container is disposed in the outer container, each of the partition portions is moved or deformed by an effect of each of the outer-container inlet and the outer-container outlet, so that communication is made between the outer-container inlet and the inner-container inlet, and between the inner-container outlet and the outer-container outlet.

The 2^{nd} aspect of the present disclosure is the desulfurizer according to the 1^{st} aspect of the present disclosure:
wherein the outer container has an abutment portion formed toward a side of the inner container in each of the outer-container inlet and the outer-container outlet, and
when the inner container is disposed in the outer container, each of the partition portions in the inner container is broken by the abutment portion in each of the outer-container inlet and the outer-container outlet.

The 3^{rd} aspect of the present disclosure is the desulfurizer according to the 2^{nd} aspect of the present disclosure:
wherein groove-like incisions are formed in each of the partition portions.

The 4^{th} aspect of the present disclosure is the desulfurizer according to the 3^{rd} aspect of the present disclosure:
wherein each of the partition portions has elasticity, and
when the inner container is removed from the outer container, each of the partition portions deforms by elastic force thereof so as to close each of the inner-container inlet and the inner-container outlet.

The 5^{th} aspect of the present disclosure is the desulfurizer according to the 4^{th} aspect of the present disclosure:
wherein a plurality of the incisions are formed from a center to a periphery of each of the partition portions,
each of the partition portions has a plurality of elastic portions being formed by breaking the partition portion along the incisions by the abutment portion,
when the inner container is disposed in the outer container, the plurality of elastic portions are opened to a side of the periphery by the abutment portion in each of the outer-container inlet and the outer-container outlet, and
when the inner container is removed from the outer container, the plurality of elastic portions return by elastic force thereof so as to close each of the inner-container inlet and the inner-container outlet.

The 6^{th} aspect of the present disclosure is the desulfurizer according to the 1^{st} aspect of the present disclosure:
wherein the outer container has an abutment portion formed toward a side of the inner container in each of the outer-container inlet and the outer-container outlet,
each of the partition portions in the inner container has a plurality of elastic portions formed by a plurality of slit-like incisions provided from a center to a periphery,
when the inner container is disposed in the outer container, the plurality of elastic portions are opened to a side of the periphery by the abutment portion in each of the outer-container inlet and the outer-container outlet, and
when the inner container is removed from the outer container, the plurality of elastic portions return by elastic force thereof so as to close each of the inner-container inlet and the inner-container outlet.

The 7^{th} aspect of the present disclosure is the desulfurizer according to the 2^{nd} aspect of the present disclosure or the 6^{th} aspect of the present disclosure:
wherein the abutment portion has a cylindrical shape, and
an end on a side of the inner container of the abutment portion is formed obliquely or irregularly.

The 8^{th} aspect of the present disclosure is the desulfurizer according to the 1^{st} aspect of the present disclosure:
wherein each of the partition portions in the inner container has
a wall having a through-hole formed therein,
a closure member that closes the through-hole, and
an elastic member that urges the closure member to the outside of the inner container so as to close the through-hole,
the outer-container inlet and the outer-container outlet have abutment portions respectively, each abutment portion being formed in a manner of being able to abut to the closure member,
when the inner container is disposed in the outer container, the abutment portion of each of the outer-container inlet and the outer-container outlet abuts to the closure member, thereby the closure member moves to the inside of the inner container, and
when the inner container is removed from the outer container, the abutment portion is separated from the closure member, and the closure member closes the through-hole by urging force of the elastic member.

The 9^{th} aspect of the present disclosure is the desulfurizer according to the 1^{st} aspect of the present disclosure:
wherein the desulfurizing section has a plurality of desulfurizing members connected to one another.

The 10^{th} aspect of the present disclosure is the desulfurizer according to the 1^{st} aspect of the present disclosure:
wherein the inner container is configured such that at least part of a wall thereof is formed of a transparent member.

The 11^{th} aspect of the present disclosure is the desulfurizer according to the 1^{st} aspect of the present disclosure:
wherein the outer-container inlet is provided in an upper part of the outer container, the inner-container inlet is provided in an upper part of the inner container, and the outer-container inlet and the inner-container inlet are opposed to each other, and
the outer-container outlet is provided in a lower part of the outer container, the inner-container outlet is provided in a lower part of the inner container, and the outer-container outlet and the inner-container outlet are opposed to each other.

The 12^{th} aspect of the present disclosure is a hydrogen generator comprising:
the desulfurizer according to any one of the 1^{st} aspect of the present disclosure to the 10^{th} aspect of the present disclosure, and
a reforming section that induces a reforming reaction of the material to generate hydrogen-containing gas.

The 12^{th} aspect of the present disclosure is a fuel cell generation system comprising:
the hydrogen generator according to the 11^{th} aspect of the present disclosure, and
a fuel cell using the hydrogen-containing gas supplied from the hydrogen generator as fuel.

The 13^{th} aspect of the present disclosure is a desulfurizing agent cartridge, which has a desulfurizing section filled with a desulfurizing agent for removing an odor component in material, and is removably disposed in an outer container provided in a flow path of the material, comprising:
an inner-container inlet that is communicated to an outer-container inlet, into which the material flows, of the outer container, and allows inflow of the material into the desulfurizing section,
an inner-container outlet that is communicated to the outer-container outlet, from which the material flows out the outer container, and allows outflow of the material from the desulfurizing section, and
partition portions provided in the inner-container inlet and the inner-container outlet respectively,
wherein when the inner container is disposed in the outer container, each of the partition portions is moved or deformed by an effect of each of the outer-container inlet and the outer-container outlet, so that communication is made between the outer-container inlet and the inner-container inlet, and between the inner-container outlet and the outer-container outlet.

### Advantage of the Disclosure

According to the present disclosure, a desulfurizer that enables easier replacement of a desulfurizing agent, and enables suppressing degradation of a desulfurizing agent during replacement, a hydrogen generator having the desulfurizer, a fuel cell generation system having the desulfurizer, and a desulfurizing agent cartridge may be provided.

### Brief Description of the Drawings

Fig. 1(a) is an outside drawing of a desulfurizer 200 of embodiment 1 of the present disclosure.
Fig. 1(b) is a front view of the desulfurizer 200 of embodiment 1 of the present disclosure.
Fig. 2 is a relevant-part section view of the desulfurizer 200 of embodiment 1 of the present disclosure.
Fig. 3 is a relevant-part section view of an inner container 208 of embodiment 1 of the present disclosure.
Fig. 4 is an outside drawing of a seal member 218 of the inner container 208 of embodiment 1 of the present disclosure.
Fig. 5 is an outside drawing of an inner container 208 according to a modification of embodiment 1 of the present disclosure.
Fig. 6(a) is an outside drawing of a projecting portion 227 according to a modification of embodiment 1 of the present disclosure, and Fig. 6(b) is an outside drawing of a projecting portion 228 according to another modification of embodiment 1 of the present disclosure.
Fig. 7 is a relevant-part section view of a desulfurizer 500 according to a modification of embodiment 1 of the present disclosure.
Figs. 8 (a) to (d) are sectional configuration diagrams for illustrating sealing structures according to modifications of embodiment 1 of the present disclosure respectively.
Fig. 9(a) is a relevant-part section view of a desulfurizer 800 of embodiment 2 of the present disclosure, and Fig.9 (b) is a partially enlarged view of Fig. 9 (a).
Fig. 10(a) is an outside view of a seal member 818 of embodiment 2 of the present disclosure, and Fig. 10(b) is a section view along AA' of Fig. 10(a).
Fig. 11 is an outside drawing of a seal member 226 according to a modification of embodiment 2 of the present disclosure.
Fig. 12(a) is an outside drawing of a seal member 224 according to a modification of embodiment 1 of the present disclosure, and Fig. 12(b) is a section view along AA' of Fig. 12(a),
Fig. 13 is a relevant-part section view of a desulfurizer 300 of embodiment 3 of the present disclosure.
Fig. 14(a) is a front view of an inner container 308 of embodiment 3 of the present disclosure before the container 308 is disposed in an outer container 301, and Fig. 14(b) is a front view of the inner container 308 of embodiment 3 of the present disclosure in a condition where the container 308 is disposed in the outer container 301.
Fig. 15 is a relevant-part section view of a desulfurizer 400 according to a modification of embodiment 3 of the present disclosure.
Fig. 16 is a relevant-part section view of a desulfurizer 600 of embodiment 4 of the present disclosure.
Fig. 17 is a relevant-part section view of an inner container 608 of embodiment 4 of the present disclosure.
Fig. 18(a) is a partially enlarged section view of a condition where the inner container 608 is disposed in an outer container 601 in the desulfurizer 600 of embodiment 4 of the present disclosure, and Fig. 18(b) is a partially enlarged section view of a condition where a cover portion 620 is detached from an outer-container body 602 in the desulfurizer 600 of embodiment 4 of the present disclosure.
Fig. 19(a) is a relevant-part section view of a desulfurizer 700 of embodiment 5 of the present disclosure, and Fig.19 (b) is a partially enlarged view of Fig. 19(a).
Fig. 20 is a relevant-part section view of an inner container 708 of embodiment 5 of the present disclosure.
Fig. 21(a) is a relevant-part section view of an inner container 908 according to a modification of embodiment 1 of the present disclosure, and Fig.21(b) is a relevant-part section view of a desulfurizing member 912.
Fig. 22(a) is a relevant-part section view of an inner container 1008 according to a modification of embodiment 1 of the present disclosure, and Fig. 22(b) is a relevant-part section view of a desulfurizing member 1012.
Fig. 23 is a schematic block diagram of a fuel cell generation system 100 of embodiment 6 of the present disclosure.

### Description of the Reference Numerals and Signs

- 1: hydrogen generator
- 2: heating section
- 3: water supply section
- 4: material supply section
- 5: reformer
- 6: gas infrastructure line
- 7: desulfurizer connection
- 8: fuel cell
- 9: closure section
- 10: material supply path
- 11: hydrogen generator bypass path
- 12: hydrogen-containing gas supply path
- 13: fuel cell bypass path
- 14: off-gas path
- 15: combustion-gas supply path
- 16: operation controller
- 17: air supply section
- 18: reforming temperature detection section
- 19: combustion fan
- 20: steam reforming section
- 21: igniter
- 22: combustion detection section
- 24: conversion section
- 25, 27: connection
- 26: selective oxidation section
- 100: fuel cell generation system
- 200, 300, 400, 500, 600, 700, 800: desulfurizer
- 201, 301, 401, 501, 601, 701: outer container
- 202, 302, 402, 502, 702: outer-container body
- 203: outer-container inlet
- 204,304,404: outer-container outlet
- 205: clamp
- 206: hinge
- 207: screw clamp
- 208, 308, 708, 808, 908: inner container
- 209: desulfurizing agent
- 210, 310: desulfurizing agent retainer
- 211: inner-container inlet
- 212, 312: inner-container outlet
- 213: spacer
- 214: inner-container packing
- 215: outer-container packing
- 216: see-through portion
- 217, 317, 717: projecting portion
- 218,318,818: seal member
- 220,420,520,720: cover portion

### Best mode for Carrying Out the Invention

Hereinafter, embodiments according to the present disclosure will be described with reference to the drawings.

### (Embodiment 1)

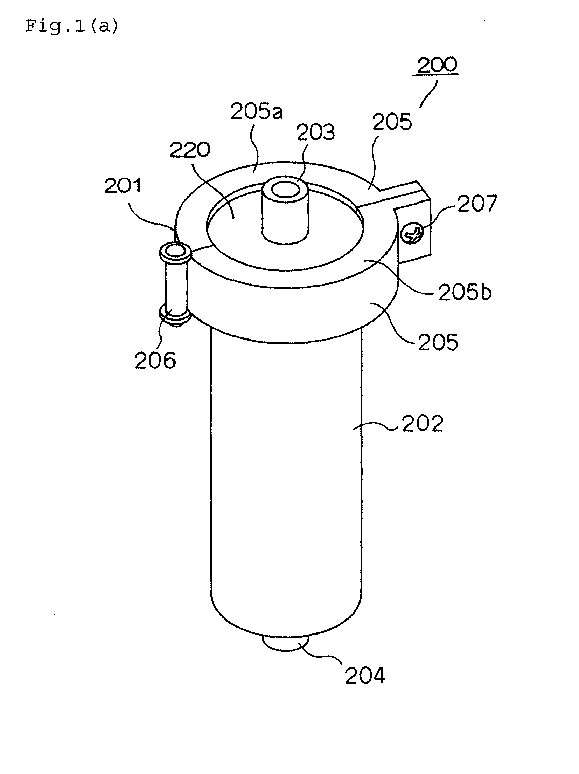

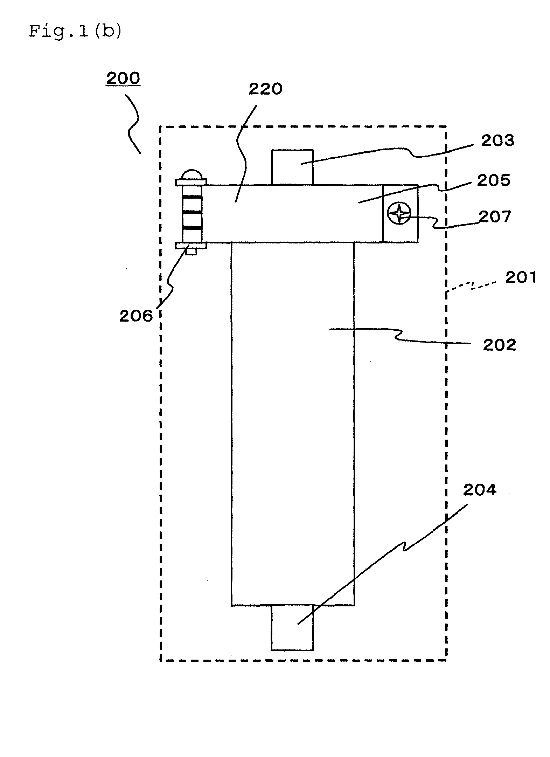

Fig. 1(a) is a perspective outside drawing of a desulfurizer 200 of embodiment 1 according to the present disclosure. Fig. 1(b) is a front view of the desulfurizer 200 of embodiment 1 according to the present disclosure. The desulfurizer 200 of embodiment 1 has an outer container 201 made of metal on an outer side thereof. The outer container 201 includes a cylindrical outer-container body 202, a cover portion 220 provided on an upper part of the outer-container body 202, and a clamp 205 for fixing the outer-container body 202 to the cover portion 220.

An outer-container inlet 203 being an inlet of material is provided in the cover portion 220, and an outer-container outlet 204 being an outlet of the material is provided in a lower part of the outer-container body 202. The cover portion 220 is configured such that it may be opened from the outer-container body 202 by detaching the clamp 205.

The clamp 205 is configured in such a manner that two half members 205a and 205b (having a ring shape or the like) are joined together, and has a hinge 206 on one side, and a screw clamp 207 on the other side. The clamp 205 is configured such that the clamp may be removed from the outer-container body 202 and from the outer-container inlet 203 by unfastening the screw clamp 207.

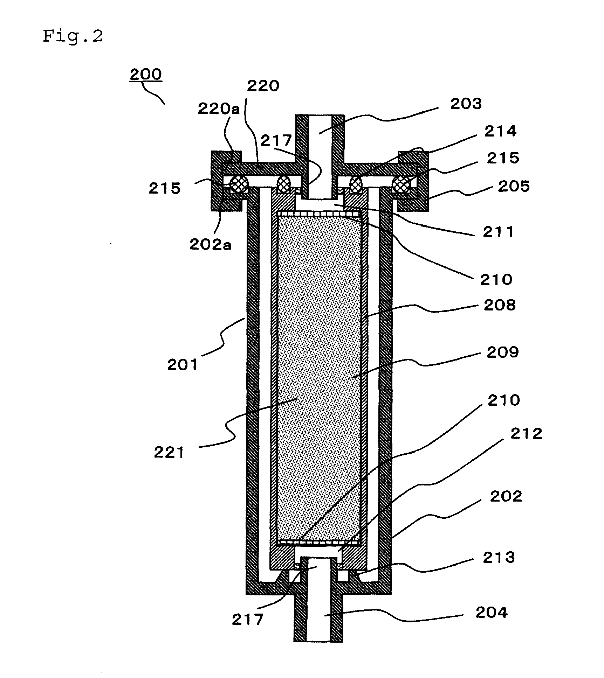

Fig. 2 is a relevant-part section view of the desulfurizer 200 of embodiment 1 of the present disclosure. As shown in the figure, a flange 202a, which is protrusively formed toward the outside, is provided in an upper part of the outer-container body 202. The flange 202a and a peripheral portion 220a of the cover portion 220 are pressed from upper and lower sides by the clamp 205 with an outer-container packing 215 disposed in between, so that airtightness of the outer container 201 is maintained. An O-ring formed of synthetic rubber may be used as the outer-container packing 215.

In the desulfurizer 200, a cylindrical inner-container 208 made of plastic is disposed in a manner of being disposed in the outer-container body 202. The inner container 208 corresponds to an example of a desulfurizing agent cartridge of the present disclosure.

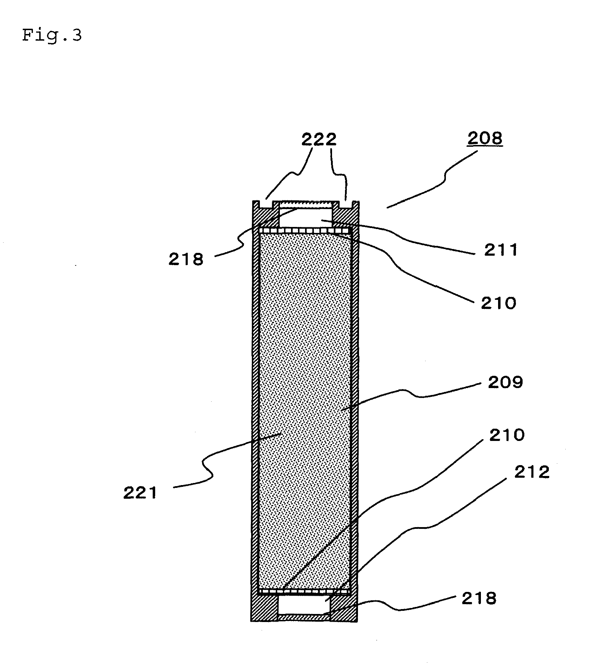

Fig. 3 is a sectional configuration diagram of the inner container 208 before being disposed in the outer container 201. A desulfurizing section 221 storing a desulfurizing agent 209 is provided in the inner container 208. An inner-container inlet 211, which is an inlet of material into the desulfurizing section 221, is provided on an upper side of the section 221, and an inner-container outlet 212, which is an outlet of the material from the desulfurizing section 221, is provided on a lower side of the desulfurizing section 221. A desulfurizing agent retainer 210, which is formed of a polypropylene nonwoven fabric, is provided on each of a top and a bottom of the desulfurizing section 221 in order to prevent leakage of the desulfurizing agent 209 from the inner container 208. Zeolite adsorbing a sulfur component is used for the desulfurizing agent 209. Polypropylene is not limitedly used for the desulfurizing agent retainer 210, and any material may be used as long as it allows formation of a configuration where the desulfurizing agent 209 is held in the inner container 208, and for example, a metal mesh, a punching plate or the like may be used.

A groove 222 for placing an inner-container packing 214 (described later) is formed in an upper end of the inner container 208. In the inner container 208, the inner-container inlet 211 and the inner-container outlet 212 correspond to open regions for flowing material respectively, and other portions are configured to be able to maintain airtightness of the container for the flowed material.

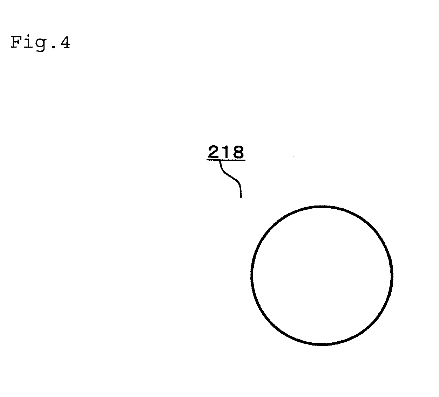

A circular seal member 218 as shown in Fig. 4 is provided in each of the inner-container inlet 211 and the inner-container outlet 212 of the inner container 208. The seal member 218 corresponds to an example of a partition portion of the present disclosure.

Since an inflammable material is flowed through the outer container 201 as described before, the outer container is preferably configured of a metal material in order to ensure airtightness of portions other than the outer-container inlet 203 and the outer-container outlet 204. The inner container 208 may be configured of a metal material as the outer container 201. However, in the embodiment, since airtightness with respect to the outside of the desulfurizer 200 may be maintained by the outer container 201, the inner container is preferably formed of a resin material such as plastic or the like, in consideration of reduction in weight of the inner container 208. While the inner container 208 is described to be made of plastic, the inner container may be partially made of metal.

As shown in Fig. 2, the inner container 208 is disposed in the outer-container body 202 in such a manner that the inner-container inlet 211 is opposed to the outer-container inlet 203, and the inner-container outlet 212 is opposed to the outer-container outlet 204.

A spacer 213 for providing a gap with respect to the inner container 208 is provided on a bottom of the outer-container body 202, and the inner container 208 is placed on the spacer 213.

A projecting portion 217 projecting to an inner-container inlet 211 side (lower side) is provided in the outer-container inlet 203. Furthermore, a projecting portion 217 projecting to an inner-container outlet 212 side (upper side) is provided in the outer-container outlet 204. The projecting portion 217 provided in each of the cover portion 220 and the outer-container body 202 corresponds to an example of an abutment portion of the present disclosure.

When the inner container 208 is disposed in the outer container 201 to replace the desulfurizing agent, the projecting portion 217 in each of the outer-container inlet 203 and the outer-container outlet 204 is pressed into each of the inner-container inlet 211 and the inner-container outlet 212, so that each seal member 218 is broken. The seal member 218 can be a seal film that is easily broken at the time of insertion. For example, a resin film such as polyethylene film may be used.

As shown in Fig. 2, an inner-container packing 214, which is an O-ring containing synthetic rubber, is provided on the groove 222 (refer to Fig. 3) in the upper part of the inner container 208 in order to maintain airtightness between the outer-container inlet 203 and the inner-container inlet 211. Similar to the outer-container packing 215, the inner-container packing 214 is configured such that the packing 214 is applied with compression force from the clamp 205 so that airtightness may be maintained. A configuration may be used, where the inner-container packing 214 is provided between the inner container 208 and the spacer 213.

Next, operation of replacing the inner container 208 is described.

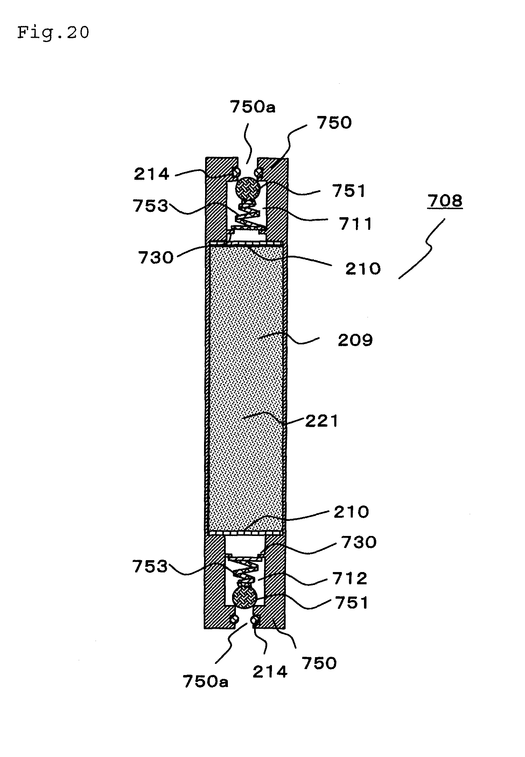

The outer container 201 is provided on material piping, and the outer-container inlet 203 and the outer-container outlet 204 are connected to the material piping via connections (refer to a desulfurizer connections 7 in Fig. 20 described later) respectively. The inlet and outlet are disconnected in the respective connections, thereby the desulfurizer 200 of the embodiment is removed from the material piping.

Then, the screw clamp 207 is detached, and the clamp 205 is opened, thereby the cover portion 220 is separated from the outer-container body 202. Then, the inner container 208 is extracted from the outer-container body 202.

Next, an inner container 208 for replacement is inserted into the outer-container body 202 from above. At that time, the projecting portion 217 breaks the seal member 218 on an inner-container outlet 212 side, so that the inner-container outlet 212 communicates to the outer-container outlet 204. Then, the cover portion 220 is covered on the outer-container body 202. At that time, the projecting portion 217 of the cover portion 220 breaks the seal member 218 in the inner-container inlet 211, so that the inner-container inlet 211 communicates to the outer-container inlet 203.

Finally, the clamp 205 is attached in a manner of clamping the flange 202a of the outer-container body 202 and the peripheral portion 220a of the cover portion 220, and the half members 205a and 205b are clamped by the screw clamp 207, which is the end of replacement operation.

As above, in the desulfurizer 200 of the embodiment, the inner container 208 is disposed in the outer container 201, and when the respective projecting portions 217 of the outer-container inlet 203 and the outer-container outlet 204 are pressed into the inner-container inlet 211 and the inner-container outlet 212, the respective seal members 218 are broken, ensuring conduction between the inner-container inlet 211 and the outer-container inlet 203, and conduction between the inner-container outlet 212 and the outer-container outlet 204.

Therefore, an unused desulfurizing agent 209, which is disposed in the inner container 208 for replacement, may be prevented from being exposed to the atmosphere to the utmost. As a result, a desulfurizing agent 209 before being disposed in the outer container 201 is prevented from adsorbing a component hindering adsorption of a sulfur component, for example, prevented from absorbing water in the atmosphere, and consequently reduction in desulfurizing performance of the agent may be prevented.

Since a device connected to gas needs to be ensured in sealing, a device to be used is typically made of metal. However, in the embodiment, since the desulfurizer has a double structure of the outer container 201 and the inner container 208, and the outer container 201 is made of metal, the inner container 208 may be made of plastic. As the inner container 208 is made of plastic, in this way the inner container is easily molded. In addition, when the inner container 208 is carried for replacement, the load is reduced, which may reduce work of an operator during maintenance.

A prior art configuration includes a configuration where the double structure of the outer container 201 and the inner container 208 like the embodiment is not used, and for example, a desulfurizing agent is directly filled in one container. In such the configuration, when a used desulfurizing agent is replaced, the container is also replaced with the desulfurizing agent, or after the container is opened, the container is shaken or tilted to drop the desulfurizing agent from the container, so that only the desulfurizing agent is replaced. In the case that the container is also replaced with the desulfurizing agent, the container with the desulfurizing agent has been sometimes brought back to a shop or the like so that the container is cut to extract the filled desulfurizing agent for reuse of the desulfurizing agent.

However, the desulfurizer 200 is configured as in the embodiment, thereby when an adsorption property of a desulfurizer 200 is reduced, the desulfurizer may be replaced without cutting the outer container 201, and only the inner container 208 may be replaced.

Furthermore, since the inner container 208 in the embodiment is made of plastic, the container may be easily cut for reuse or recycle of a filled desulfurizing agent.

When the desulfurizing agent is extracted by shaking or tilting the outer container, the desulfurizing agent is sometimes scattered during operation. When the scattered desulfurizing agent is exposed to the atmosphere, a sulfur compound adsorbed on the desulfurizing agent is desorbed, thereby odor is emitted, leading to reduction in efficiency of collection operation.

However, in the embodiment, since the inner container 208 is configured to maintain airtightness of the container for the material flowing through the inside thereof, an open region of the inner container 208 is limited to each of the inner-container inlet 211 and the inner-container outlet 212. Therefore, when the inner container 208 is extracted, an area, where the desulfurizing agent 209 in the inner container 208 is exposed to the atmosphere, may be reduced, and therefore the amount of sulfur compounds desorbed from the desulfurizing agent 209 may be decreased, leading to reduction in probability of odor emission.

As a result, workability of collecting the desulfurizing agent may be improved, and a desulfurizer may be easily replaced even in an installation place of a hydrogen generator, a fuel cell generation system and the like.

That is, in embodiment 1, collection workability of the desulfurizer 200, and performance may be improved in reuse of the outer container 210, in maintenance, and in recycling.

Moreover, in embodiment 1, as shown in Fig. 2, the outer-container inlet 203 is provided in the upper part of the outer container 201, the inner-container inlet 211 is provided in the upper part of the inner container 208, and the outer-container inlet 203 and the inner-container inlet 211 are opposed to each other. Furthermore, the outer-container outlet 204 is provided in the lower part of the outer container 201, the inner-container outlet 212 is provided in the lower part of the inner container 208, and the outer-container outlet 204 and the inner-container outlet 212 are opposed to each other. In this way, the outer-container inlet 203, the inner-container inlet 211, the inner-container outlet 212, and the outer-container outlet 204 are disposed substantially on a straight line. Therefore, resistance in material flow may be reduced.

In the case of using a desulfurizing agent being changed in color by adsorbing a sulfur component (for example, changed in color from white to brown or gray), the inner container 208 is configured by a material through which the inside of the container 208 may be seen, thereby progress of desulfurization may be visually confirmed, and therefore the replacement timing of the inner container 208 may be easily determined. Such a configuration may be achieved by an inner container 208 formed of a semitransparent or transparent resin material.

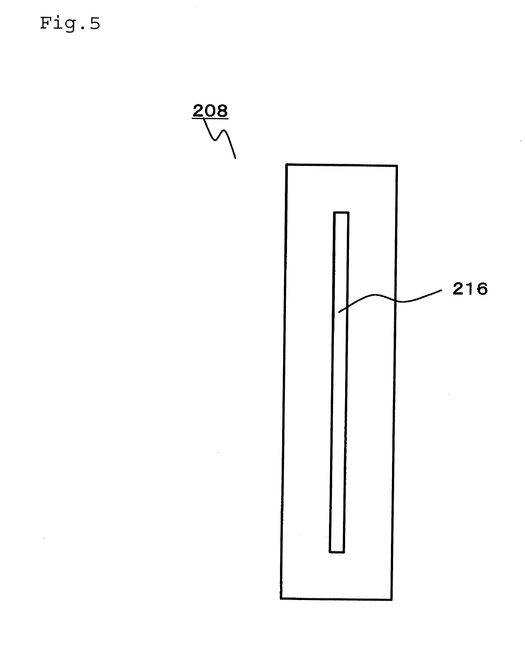

As shown in an outside drawing of an inner container of Fig. 5, the inner container 208 may be configured such that a transparent see-through portion 216 is provided in a side face of the inner container 208 so that a desulfurizing agent disposed in the inner container 208 may be visually observed.

The desulfurizer 200 of embodiment 1 is configured such that material is fed from the outer-container inlet 203 to the inner-container inlet 211, and in turn fed from the inner-container outlet 212 to the outer-container outlet 204 through the desulfurizing agent 209 disposed in the inner container 208 (material flows from an upper side to a lower side in Fig. 2). However, the desulfurizer may be configured such that the outer-container outlet 204 is used as an inlet of material, and the material is fed in a direction opposite to a direction shown in embodiment 1 (material flows from a lower side to an upper side in Fig. 2).

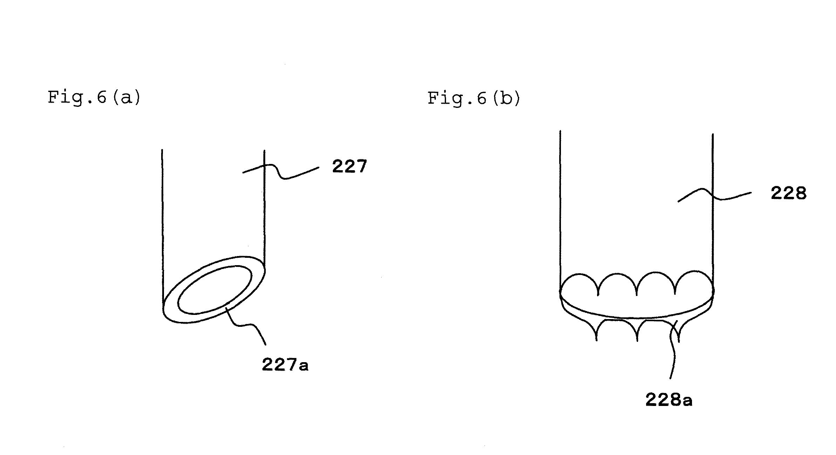

In embodiment 1, the projecting portion 217 has a cylindrical shape, and a fore end thereof is horizontally formed. However, a fore end 227a may be obliquely formed as a projecting portion 227 shown in Fig. 6(a). Alternatively, a projecting portion 228 formed with a sharp projection 228a may be used as shown in Fig. 6(b).

A projecting portion having such a shape is used, thereby the seal member 218 may be easily broken. The projection 228a formed in this way corresponds to an example of an irregularly formed, projecting portion of the present disclosure.

As the seal member 218, a thin material such as thin natural rubber used for a rubber balloon may be stretched and attached to each of the inner-container inlet 211 and the inner-container outlet 212. In this case, when the seal member 218 is broken by the projecting portion 217, a central portion of the seal member is drawn to the periphery thereof. This may reduce disturbance of material flow by a broken seal member 218 left in the inside of each of the inner-container inlet 211 and the inner-container outlet 212.

Alternatively, a material, which tends to be wound from the center to the periphery, may be used in place of the thin material such as thin natural rubber. In this case, the seal member is wound to the periphery upon breakage of the seal member, which may reduce disturbance of material flow by a broken seal member.

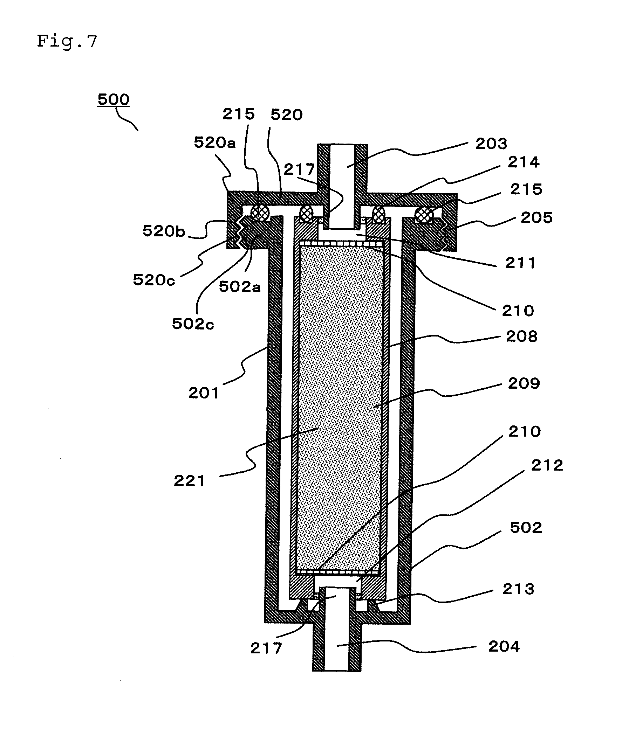

In embodiment 1, the cover portion 220 and the outer-container body 202 are clamped by the clamp 205. However, the clamp 205 may not always be used. For example, as a desulfurizer 500 of Fig. 7, an outer-container body 501 may be used, in which the cover portion 220 and the outer-container body 202 are formed with screws respectively, and fastened to each other by engaging the screws with each other. A cover portion 520 of the desulfurizer 500 shown in Fig. 7 is formed with a screw portion 520b downward from an edge 520a, and a screw thread 520c is formed on the inside of the screw portion 520b. A screw thread 502c is formed on an end face of a flange 502a of an outer-container body 502. The screw thread 520c of the cover portion 520 is engaged with the screw thread 502c of the outer-container body 502, thereby the outer-container body 502 may be fastened to the cover portion 520.

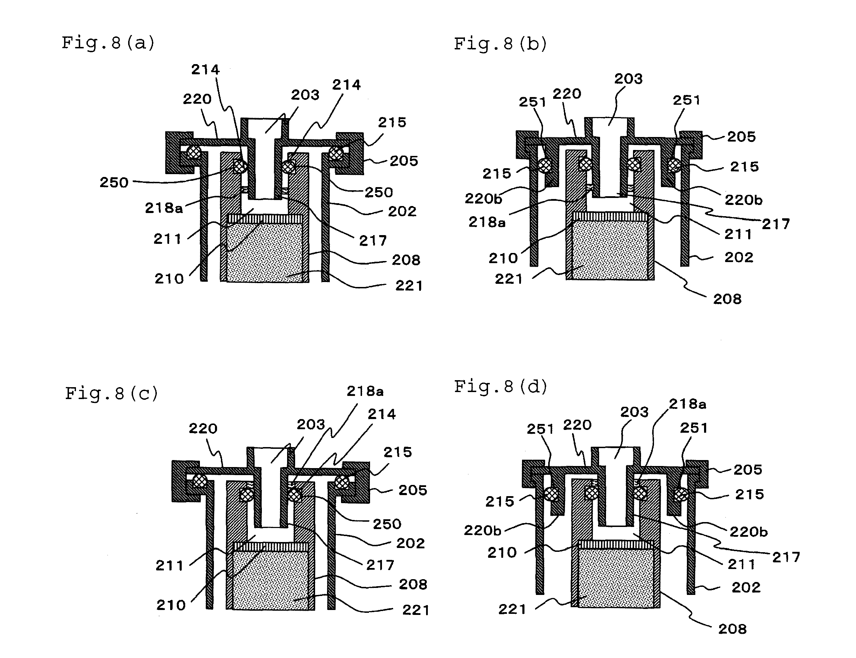

In embodiment 1, the inner-container packing 214 seals a space for material flow, in which the inner container 208 is accommodated, and the outer-container packing 215 seals a space within the outer container 201. Each of the inner-container packing 214 and the outer-container packing 215 is sandwiched from upper and lower sides, so that each space is sealed. However, such a configuration is not limiting, and as shown in Fig. 8(a), a configuration where the inner-container packing 214 is sandwiched from right and left sides may be used. Furthermore, as shown in Fig. 8(b), a configuration where both the inner-container packing 214 and the outer-container packing 215 are sandwiched from right and left sides may be used. In the configuration shown in Fig. 8(a), a groove 250 is formed in the inside of the inner-container inlet 211, and the inner-container packing 214 is disposed in the groove 250. In this way, the inner-container packing 214 is sandwiched between an outer wall of the projecting portion 217 and an inner wall of the inner-container inlet 211, so that the space through which material flows is sealed. In this case, the seal member 218 is provided on a desulfurizing section 221 side with respect to the groove 250 in the inner-container inlet 211. In Fig. 8, a broken seal member 218 is shown as a seal portion 218a.

On the other hand, in a configuration shown in Fig. 8(b), the outer-container packing 215 is also sandwiched from right and left sides in addition to the configuration of Fig. 2(a). In the configuration of Fig. 8(b), a packing holder 220b is formed from a lower side of the cover portion 220 so that the packing 215 is disposed in a space between an outer wall of the inner container 208 and an inner wall of the outer-container body 202. A groove 251 is formed on an outer circumferential side of the packing holder 220b, and the outer-container packing 215 is disposed in the groove. The outer-container packing 215 is sandwiched by an outer wall of the packing holder 220b and the inner wall of the outer-container body 202, and thus seals a space within the outer container 201.

In Figs. 8(a), 8(b), each seal member 218 is disposed on the desulfurizing section 221 side with respect to the groove 250. However, the seal member 218 may be disposed on a fore end side with respect to the groove 250 in the inner-container inlet 211 as shown in Figs. 8(c), 8(d). In Figs. 8(c), 8(d), a broken seal member 218a is shown. Fig. 8(c) is a modification of Fig. 8(a), and Fig. 8(d) is a modification of Fig. 8(c).

### (Embodiment 2)

Next, a desulfurizer of embodiment 2 according to the present disclosure is described.

The desulfurizer of embodiment 2 is the same in basic configuration as the desulfurizer of embodiment 1, but different in the configuration of a seal member. Therefore, the following discussion will focus on the differences. The same components as in embodiment 1 are marked with the same reference numerals.

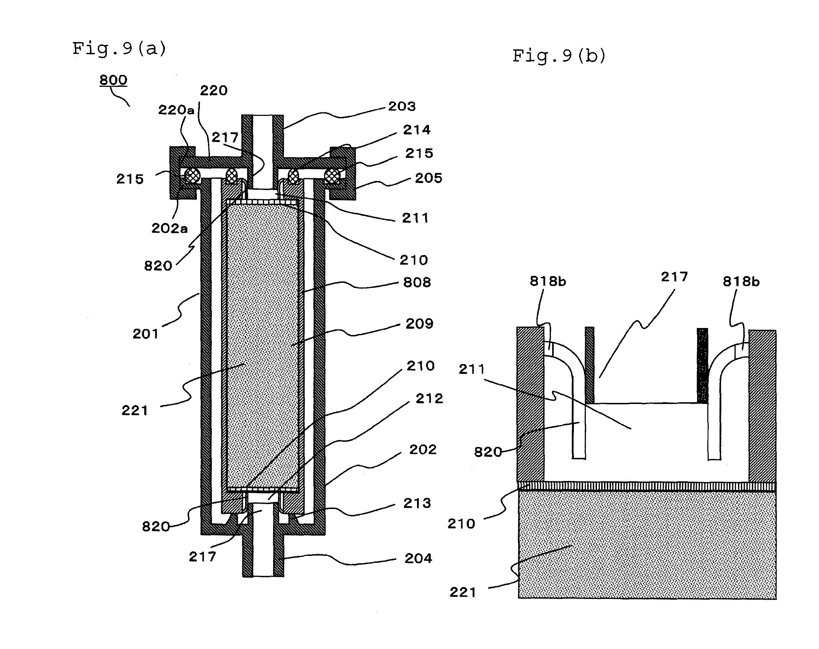

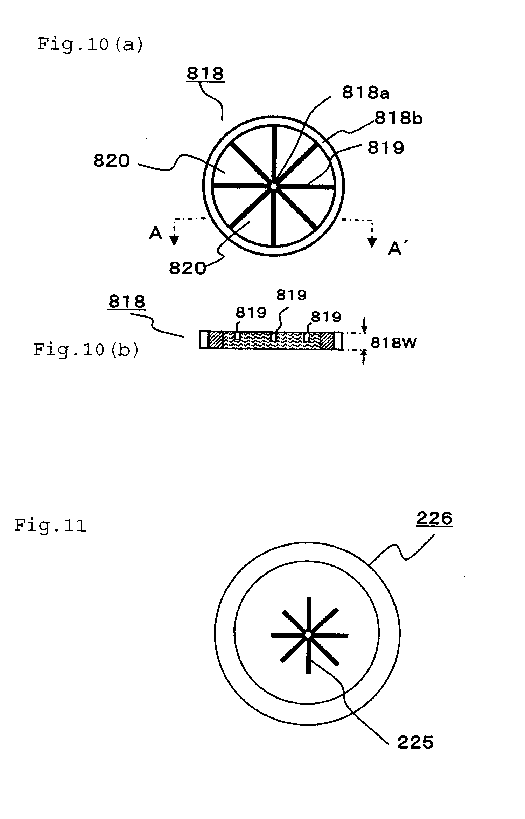

Fig. 9(a) is a sectional configuration diagram of a desulfurizer 800 of embodiment 2 according to the present disclosure. Fig. 9(b) is an enlarged, sectional configuration diagram of a portion near an inner-container inlet 211 in Fig. 9(a). Fig. 10(a) is a plan view of a seal member in embodiment 2. Fig. 10(b) is a section view along AA' of Fig. 10(a).

A seal member 818, which corresponds to an example of a partition portion of the present disclosure, is configured such that incisions 819 are formed in the seal member 818 so that the seal member is easily broken unlike the seal member 218 of embodiment 1.

In the seal member 818 of Fig. 10(a), a plurality of incisions 819 are formed from the center 818a of the circular seal member to the periphery 818b thereof. Fig. 10(b) is the section view along AA' of Fig. 10(a). As shown in Fig. 10(b), each incision 819 is formed small in depth compared with thickness 818w of the seal member 818, and therefore the seal member 818 is not penetrated by the incision 819. In Fig. 10(b), width of the incision 819 and the thickness 818w of the seal member 818 are shown enlarged compared with actual size for illustration purposes. The incision 819, which does not penetrate the seal member 818 in this way, corresponds to an example of a groove-like incision of the present disclosure.

When an inner container 808, in which such a seal member 818 is provided in each of an inner-container inlet 211 and an inner-container outlet 212, is disposed in an outer container 201, each seal member 818 is broken by a projecting portion 217 as shown in Fig. 9(a). At that time, the seal member 818 is broken along the incisions 819, and a plurality of elastic portions 820, each having an approximately triangle shape, are formed by the incisions 819.

As shown in Fig. 9(b), in the seal member 818 in the inner-container inlet 211, elastic portions 820 of the seal member is spread out to a periphery 818b side by a projecting portion 217, so that communication is made between an outer-container inlet 203 and the inner-container inlet 211. Communication is made even between an inner-container outlet 212 and an outer-container outlet 204 by a similar configuration.

In the case that a used inner-container 808 is replaced, when the projecting portion 217 is drawn from the seal member 818, the seal member 818 returns to an original shape by elastic force thereof so as to close each of the inner-container inlet 211 and the inner-container outlet 212.

This will reduce the area of an open region of each of the inner-container inlet 211 and the inner-container outlet 212. As a result, when the inner container 808 is extracted, probability of exposure of a desulfurizing agent 209 in the inner container 808 to the atmosphere may be further decreased.

In this way, in embodiment 2, when an unused inner-container 808 for replacement is transported, since the seal member 818 seals the inner container 808, adsorption of water or the like on a desulfurizing agent may be prevented. Furthermore, when a used inner-container 808 is extracted, the seal member 818 returns so as to close each of the inner-container inlet 211 and the inner-container outlet 212. Therefore, the opening area is reduced, and diffusion of odor to the atmosphere may be reduced, and consequently efficiency of collection operation may be improved.

As shown in Fig. 11, a seal member 226 may be used, in which incisions 225 are not formed up to the periphery, and are formed only in a region near the center unlike the seal member 818 in the embodiment.

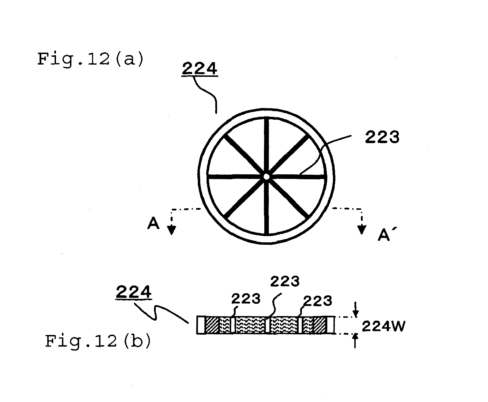

Unlike the seal member 818 in the embodiment, as shown in Figs. 12(a), 12(b), an incision 223 may already penetrate through thickness 224W of a seal member 224 even in a condition where an inner container has not been used. Fig. 12(a) is a plan view of the seal member 224, and Fig. 12(b) is a section view along AA' of Fig. 12(a). However, in the case of the seal member 224 having such a configuration, while sealing performance during nonuse is degraded compared with the seal member 818 in embodiment 2, since contact area between a desulfurizing agent and the atmosphere is limited to regions of the incisions 223, adsorption of water on the desulfurizing agent may be suppressed. The incisions 223 penetrating the seal member 224 correspond to an example of slit-like incisions of the present disclosure.

In the desulfurizer of embodiment 2, the projecting portion 227 or 228 shown in Fig. 6(a) or 6(b) may be used.

### (Embodiment 3)

Next, a desulfurizer 300 of embodiment 3 according to the present disclosure is described. The desulfurizer 300 of embodiment 3 is the same in basic configuration as that of embodiment 1, but different in configuration of each of an inner-container outlet and an outer-container outlet. Therefore, the following discussion will focus on the differences from embodiment 1. The same components as in embodiment 1 are marked with the same reference numerals.

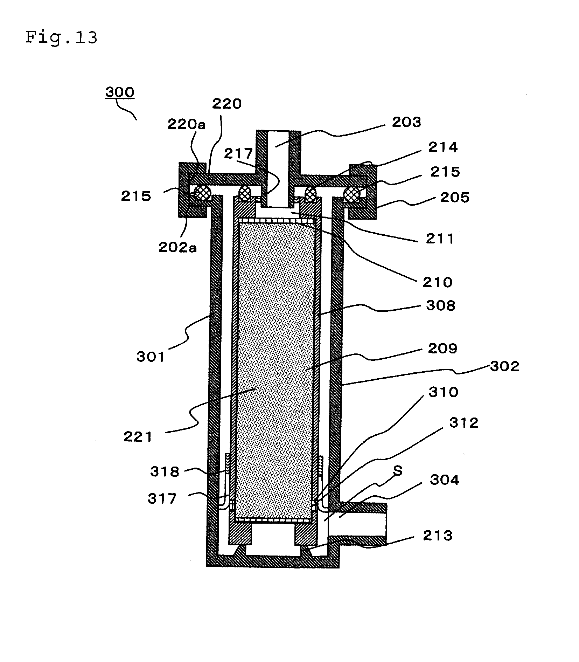

Fig. 13 is a relevant-part section view of the desulfurizer 300 of embodiment 3 of the present disclosure. In the desulfurizer 300 of embodiment 3, an outer-container outlet 304 of an outer container 301 is provided in a side face of an outer-container body 302 unlike in embodiment 1. In addition, a plurality of L-shaped projecting portions 317 are provided from a lower inner-wall of the outer-container body 302 in place of the projecting portion 217 in the outer-container outlet 204 in embodiment 1.

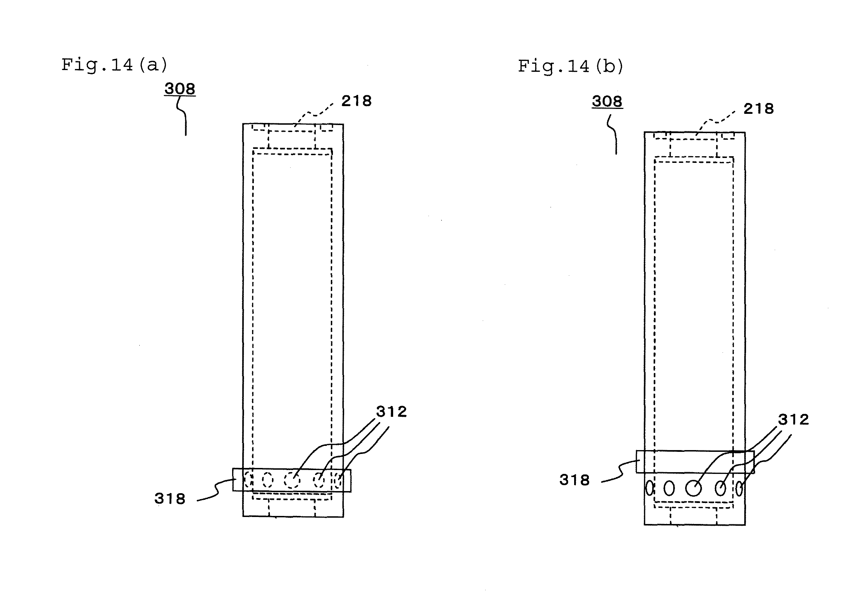

Fig. 14(a) is a front view of an inner container 308 before the container 308 is disposed in an outer container 301. Fig. 14(b) is a front view of the inner container 308 when the container 308 is disposed in the outer container 301. In embodiment 3, a plurality of circular inner-container outlets 312 are provided in a side face as shown in an outside drawing of the inner container 308 shown in Fig. 14(a). A seal member 318 is provided surrounding the plurality of inner-container outlets 312 to prevent the inner-container outlets 312 from communicating with the atmosphere.

A desulfurizing agent retainer 310 for preventing leakage of a desulfurizing agent is provided on the inside of the inner container 308 in a manner so as to surround the inner-container outlets 312. The inner container 308 corresponds to an example of a desulfurizing agent cartridge of the present disclosure.

When the inner container 308 having such a configuration is inserted into an outer-container body 302 in order to dispose the inner container 308 in an outer container 301, ends of the projecting portions 317 provided on the outer-container body 302 abut to the seal member 318, so that the seal member 318 slides upward (refer to Fig. 14(b)). Thus, the inner-container outlets 312 are exposed, so that the inner-container outlets 312 communicate to the outer-container outlet 304. Since the projecting portions 317 are provided partially on the inner wall of the outer-container body 302, the inner-container outlets 312 are not entirely closed.

The inner container 308 is configured in this way, thereby the desulfurizer 300 of embodiment 3 is configured such that material, which is discharged from the inner-container outlets 312 through the inner container 308, is fed to the outer-container outlet 304 through a space (refer to S in the figure) formed by an outer wall of the inner container 308 and an inner wall of the outer container 301.

In this way, the outer-container outlet 304 is provided in the side face of the outer container 301. Thus, for example, in operation where the outer-container inlet 203 and the outer-container outlet 304, which are connected to other piping respectively, are removed, the removal operation of the outer-container inlet 203 does not interfere with removal operation of the outer-container outlet 204 unlike in embodiment 1. Therefore, the removal operation is facilitated. More specifically, in the case of embodiment 1, since the outer-container inlet 203 and the outer-container outlet 204 are vertically disposed, for example, when the desulfurizer 200 is tried to be moved to a lower side in order to remove the outer-container inlet 203 from piping, such movement inevitably causes interference with a connection between the outer-container outlet 204 provided on the lower side and piping, consequently the desulfurizer is hardly moved. In the case that the outer-container outlet 204 is removed from piping, the same difficulty occurs. On the other hand, in the desulfurizer 300 of embodiment 3, since the outer-container inlet 203 and the outer-container outlet 304 are disposed on an upper side and in a side face respectively, for example, when the outer-container inlet 203 is removed, since a space for moving the desulfurizer 300 to a lower side exists, the desulfurizer 300 may be smoothly removed without causing interference with a connection between the outer-container outlet 304 and piping.

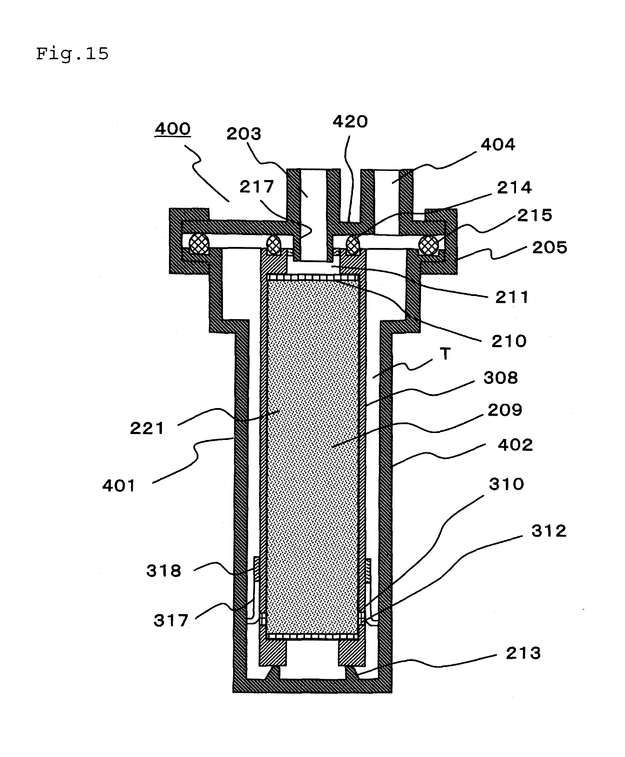

In embodiment 3, the outer-container outlet 304 is provided in the side face of the outer-container body 302. However, such a position is not limiting, and the outer-container outlet may be disposed in a cover portion 420 next to the outer-container inlet 203 as an outer-container outlet 404 of a desulfurizer 400 shown in Fig.15.

In such a configuration, material, from which a sulfur component is removed through the inner container 308, is discharged from the inner-container outlets 312, then moved to an upper side through a space (refer to T in the figure) formed by an outer wall of the inner container and an inner wall of an outer container 401 (inner wall of an outer-container body 402), and then fed to the outer-container outlet 404.

In this way, the outer-container outlet 404 is provided in the same side as the outer-container inlet 203. Thus, for example, in operation where the outer-container inlet 203 and the outer-container outlet 404, which are connected to other piping respectively, are removed, the operation may be performed on the same upper side. Therefore, when the outer-container outlet 404 and the outer-container inlet 203 are removed, since a space for moving the desulfurizer 400 to a lower side exists, the desulfurizer 400 may be smoothly removed without causing interference as in the configuration shown in Fig. 13.

### (Embodiment 4)

Next, a desulfurizer of embodiment 4 according to the present disclosure is described.

The desulfurizer of embodiment 4 is the same in basic configuration as the desulfurizer of embodiment 1, but different in configuration of a partition portion. Therefore, the following discussion will focus on the differences. The same components as in embodiment 1 are marked with the same reference numerals.

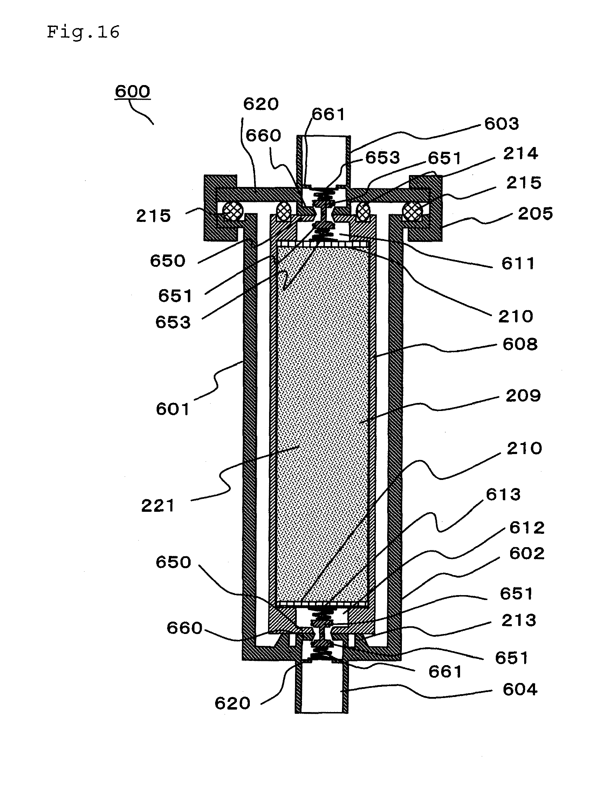

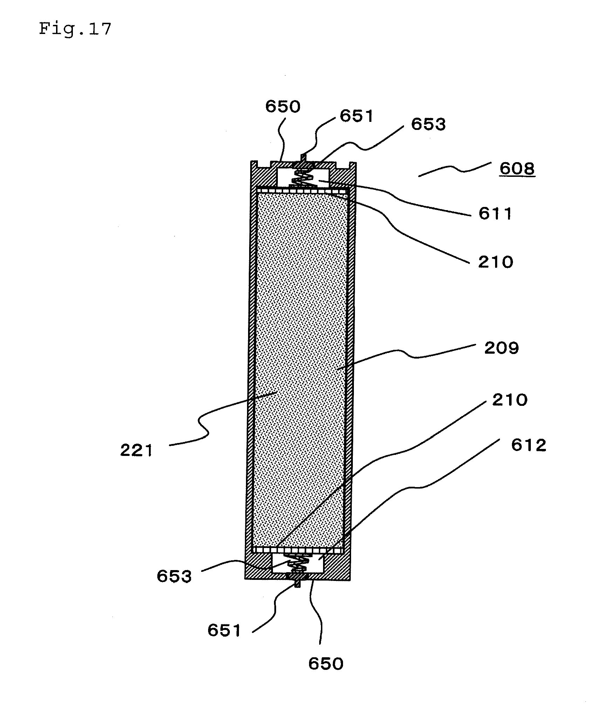

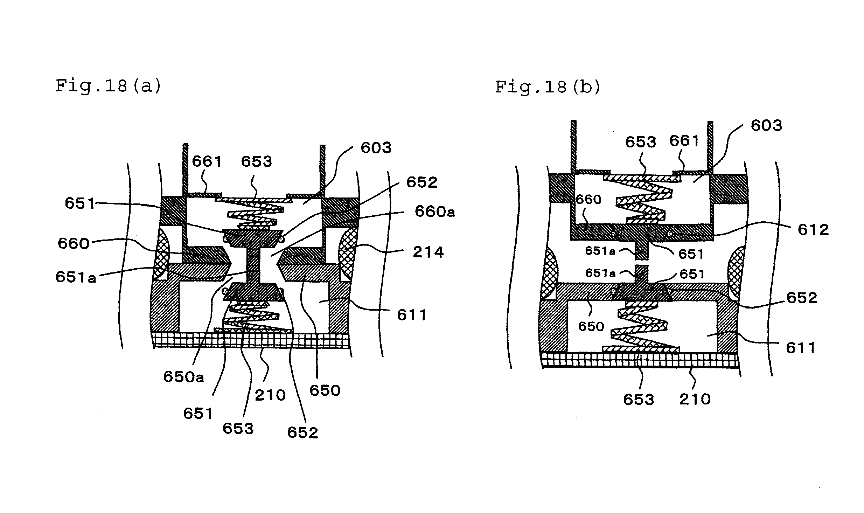

Fig. 16 is a sectional configuration diagram of a desulfurizer 600 of embodiment 4. Fig. 17 is a sectional configuration diagram of an inner container 608 of embodiment 4. Fig. 18(a) is an enlarged view of a portion near an inner-container inlet 611. Fig. 18(b) is an enlarged view of the portion near the inner-container inlet 611, showing a condition where a clamp 205 is detached so that a cover portion 620 is removed from an outer-container body 602. The inner container 608 corresponds to an example of a desulfurizing agent cartridge of the present disclosure.

As shown in the figures, in the inner container 608 of the desulfurizer 600 of embodiment 4, a wall 650 having a through-hole 650a formed therein is provided in an inner-container inlet 611. In addition, a closure member 651 is provided within the inner-container inlet 611, which closes the through-hole 650a when the inner container 608 is removed from an outer container 601. The closure member 651 has a truncated cone shape being reduced in width toward the outside of the inner container 608, and a packing 652 is provided on the periphery of the member. Furthermore, the closure member 651 has a projecting portion 651a on a top thereof, the projecting portion being formed toward the outside of the inner container 608. Furthermore, a spring member 653 is provided, one end of which is fixed to a desulfurizing agent retainer 210, and the other end of which is fixed to a bottom of the closure member 651. An inner wall of the through-hole 650a is configured to have a taper shape being increased in width toward an inner side in accordance with a shape of the closure member 651. The spring member 653 corresponds to an example of an elastic member of the present disclosure. An example of a partition portion of the present disclosure corresponds to the wall 650, the closure member 651, the packing 652, and the spring member 653.

Even in an inner-container outlet 612, a wall 650, a closure member 651, a packing 652, and a spring member 653 are provided.

On the other hand, in an outer container 601, a wall 660 having a through-hole 660a formed therein is similarly provided in an outer-container inlet 603. The outer-container inlet 603 also has a closure member 651, a packing 652, and a spring member 653. One end of the spring member 653 is fixed to a support member 661 projecting from an inner wall of the outer-container inlet 603. Even in an outer-container outlet 604, a wall 660, a closure member 651, a packing 652, a spring member 653, and the support member 661 are provided. The closure member 651 provided in each of the outer-container inlet 603 and the outer-container outlet 604 corresponds to an example of an abutment portion of the present disclosure.

As shown in Fig. 18(a), in embodiment 4, in a condition where the inner container 608 is installed in the outer container 601, the projecting portion 651a of the closure member 651 on an outer-container inlet 603 side and the projecting portion 651a of the closure member 651 on an inner-container inlet 611 side are pushed by each other, thereby each closure member 651 is moved to each inner side from each of the through-holes 650a and 660a.

In this way, each closure member 651 is moved from each of the through-holes 650a and 660a, thereby the outer-container inlet 603 communicates to the inner-container inlet 611. Similarly, the inner-container outlet 612 communicates to the outer-container outlet 604.

On the other hand, as shown in Fig. 18(b), in the case that the inner container 608 is removed from the outer container 601, when a clamp 205 is detached, and a cover section 620 is removed from an outer-container body 602, the projecting portion 651a of the closure member 651 in the inner-container inlet 611 is separated from the projecting portion 651a of the closure member 651 in the outer-container inlet 603. When the projecting portions 651a are separated from each other, the closure member 651 in the inner-container inlet 611 is urged to a wall 650 side by elastic force of the spring member 653, and abuts to the wall 650, so that the through-hole 650a is closed. Even in the outer-container inlet 603, the closure member 651 abuts to the wall 660 by elastic force of the spring member 653, so that the through-hole 660a is closed. Similarly, in the inner-container outlet 612 and the outer-container outlet 604, the respective through-holes 650a and 660a are closed.

As shown in the sectional configuration diagram of the inner container 608 of Fig. 17, when the inner container 608 is removed from the outer container 601, the inner-container inlet 611 and the inner-container outlet 612 of the inner container 608 are closed, therefore diffusion of odor to the atmosphere may be reduced, and consequently efficiency of the collection operation may be improved.

### (Embodiment 5)

Next, a desulfurizer of embodiment 5 according to the present disclosure is described. The desulfurizer of embodiment 5 is the same in basic configuration as the desulfurizer of embodiment 4, but different in configuration of each of a partition portion and an abutment portion. Therefore, the following discussion will focus on the differences. The same components as in embodiment 1 are marked with the same reference numerals.

In embodiment 4, the closure members 651 and the spring members 653 are provided in the outer-container inlet 603 and the outer-container outlet 604 respectively. However, the desulfurizer of embodiment 5 is configured such that the closure members 651 and the spring member 653 are not provided, and projecting portions are provided. In addition, a configuration for closing each of the inner-container inlet 611 and the inner-container outlet 612 is different from that in embodiment 4.

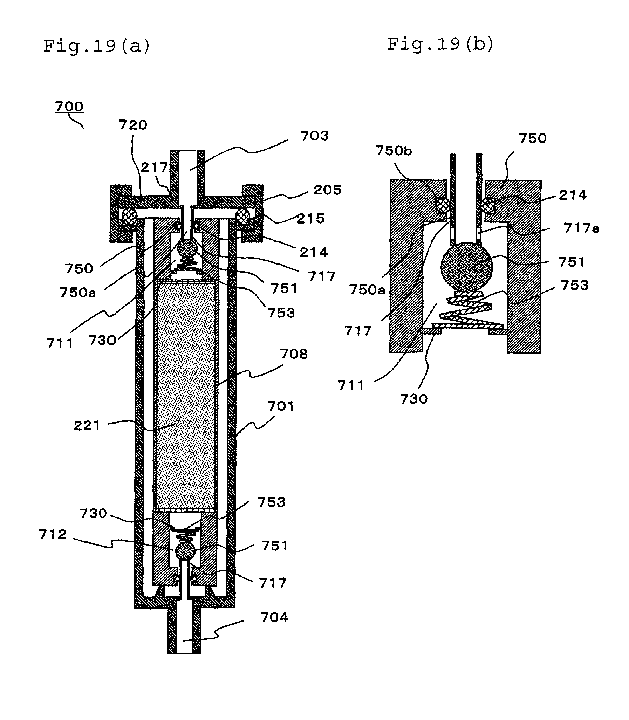

Fig. 19(a) is a sectional configuration diagram of a desulfurizer 700 of embodiment 5. Fig. 19(b) is an enlarged view of a portion near an inner-container inlet 711. Fig. 20 is a sectional configuration diagram of an inner container 708 of embodiment 4. The inner container 708 corresponds to an example of a desulfurizing agent cartridge of the present disclosure.

In the desulfurizer 700 like the desulfurizer 600, a wall 750 having a through-hole 710a formed therein is provided in an end of an inner-container inlet 711. A groove 750b is formed in an inner wall of the wall 750, and an inner-container packing 214 is disposed in the groove. In addition, a closure member 751 is provided within the inner-container inlet 711, which closes the through-hole 750a when an inner container 708 is removed from an outer container 701. The closure member 751 has a spherical shape. Furthermore, a spring member 753 is provided, one end of which is fixed to a support member 730 formed on an inner wall of the inner-container inlet 711, and the other end of which is fixed to a bottom of the closure member 751. The spring member 753 corresponds to an example of an elastic member of the present disclosure. An example of a partition portion of the present disclosure corresponds to the wall 750, the closure member 751, the spring member 753, and the support member 730.

Even in an inner-container outlet 712, a wall 750, a closure member 751, an inner-container packing 214, and a spring member 753 are provided.

In the outer container 701, a projecting portion 717 is provided toward a lower side in an outer-container inlet 703 of a cover section 720. A plurality of through-holes 717a are formed in a sidewall near an end of the projecting portion 717. A projecting portion 717 is provided toward an upper side even in an outer-container outlet 704 of an outer-container body 702. The projecting portion 717 corresponds to an example of an abutment portion of the present disclosure.

As shown in Figs. 19(a), 19(b), in a condition where the inner container 708 is installed in the outer container 701, the projecting portion 717 of the outer container 701 pushes the closure member 751 to a desulfurizing section 221 side, and the closure member 751 is moved to an inner side from the through-hole 710a. At that time, the outer-container inlet 703 communicates to the inner-container inlet 711 via the through-holes 717a formed in the end of the projecting portion 717. Similarly, the inner-container outlet 712 communicates to the outer-container outlet 704.

On the other hand, as shown in a sectional configuration diagram of the inner container 708 of Fig. 20, when the inner container 708 is removed from the outer container 701, since the closure member 751 is released from the pressure given by the projecting portion 717, the closure member is urged to a wall 750 side by elastic force of the spring member 753, and abuts to the wall 750. The closure member 751 closes the through-hole 710a through such operation. Similarly, the through-hole 750a in the inner-container outlet 712 is closed.

As above, even in the configuration of embodiment 5, when the inner container 708 is removed from the outer container 701, since the inner-container inlet 711 and the inner-container outlet 712 of the inner container 708 are closed, diffusion of odor to the atmosphere may be reduced.

In the embodiment, the spring member 753 is fixed to the support member 730. However, in the case that the desulfurizing agent retainer 210 is formed of a metal mesh or the like, the spring member may be directly fixed to the desulfurizing agent retainer 210. Even in embodiment 4, it is acceptable that a support member is formed in each of the inner-container inlet 611 and the inner-container outlet 621, and an end of the spring member 653 is fixed to the support member in the same way as in embodiment 5.

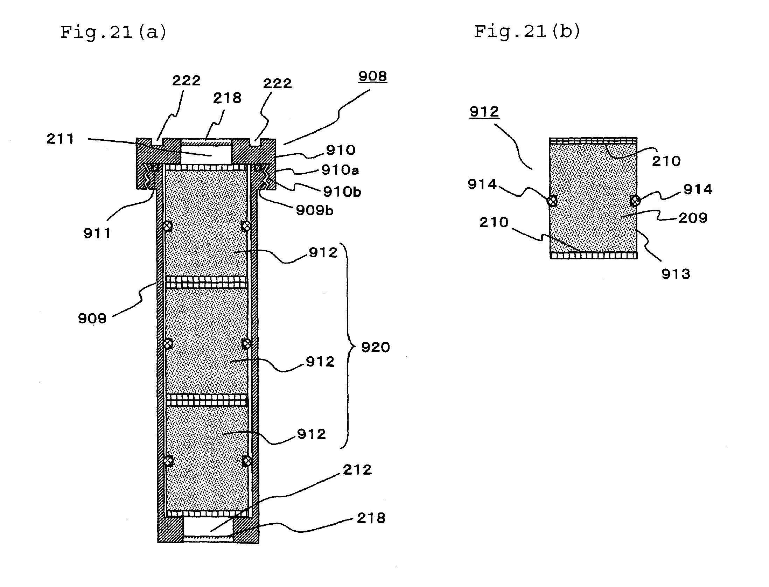

In embodiments 1 to 5, the desulfurizing agent 209 is filled in the inner container and thus the desulfurizing section 221 is configured. However, a desulfurizing section may be configured by connecting a plurality of containers to one another, each container being filled with the desulfurizing agent 209. Fig. 21(a) shows an inner container 908 having such a configuration. As shown in the figure, an inner container body 909 and a cover section 910, which is disposed on an upper part of the inner container body 909, are provided in the inner container 908. A convex portion 910a is formed toward a lower side in the periphery of the cover portion 910, and a screw thread 910b is formed on the inside of the convex portion. A screw thread 909b is formed even on an outer wall of the upper part of the inner container body 909. Furthermore, a groove is formed in an upper end of the inner container body 909, and a packing 911 is provided in the groove. The screw thread 909b of the inner container body 909 is engaged with the screw thread 910b of the cover section 910, and fastened thereto, thereby the packing 911 is pressed by the cover section 910 and the inner container body 909, so that the inside of the inner container 908 is sealed. In the inner container body 909, three desulfurizing members 912 are provided and are connected to one another, each desulfurizing member being filled with the desulfurizing agent 209. The three desulfurizing members 912 configure a desulfurizing section 920. Fig. 21 (b) is a sectional configuration diagram of the desulfurizing member 912. The desulfurizing member 912 includes a container 913 filled with the desulfurizing agent 209, wherein an upper part and a lower part of the container 913 are opened, and a desulfurizing agent retainer 210 is provided in each of the upper and lower parts so as to prevent leakage of the desulfurizing agent 209. An O-ring 914 is provided on a sidewall of the container, which prevents material flowing through a space between an inner wall of the inner container body 909 and an outer wall of the container 913.

In such a configuration, when a desulfurizing agent is replaced, for example, in the case that only a desulfurizing agent 209 in a desulfurizing member 912 on an upstream side is changed in color, only the desulfurizing member 912 on the upstream side may be replaced. In the case that such a desulfurizer is used for a fuel cell generation system, since generated output is varied for each home, adsorption amount of sulfur is also varied. Therefore, when a desulfurizing agent is replaced in each home, if all desulfurizing agents are replaced in any home, an unused desulfurizing agent is also replaced in a home using a small amount of desulfurizing agent. On the other hand, the configuration shown in Fig. 21 is used, thereby desulfurizing agents may be partially replaced, and consequently cost may be reduced.

Since a desulfurizing function is lost from an upstream side, when one desulfurizing member 912 on an upstream side (first position from above in the figure) is replaced, an unused desulfurizing member 912 is preferably disposed on the most downstream side (third position from above in the figure).

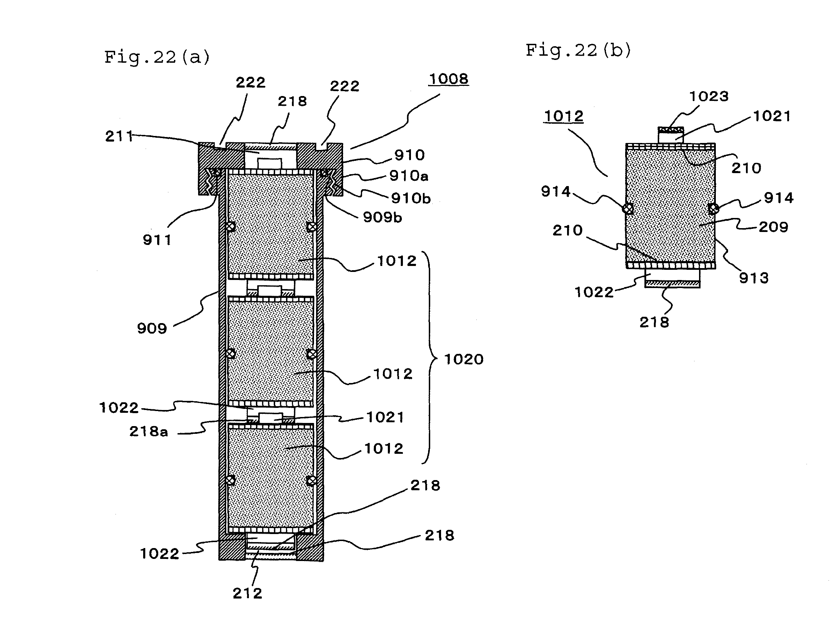

The configuration of Fig. 21(b) is not limiting, and a configuration where a desulfurizing member for replacement is also sealed may be used. Fig. 22(a) shows an inner container 1008 configured by connecting a plurality of desulfurizing members 1012 having such a configuration to one another. Fig. 22(b) is a sectional configuration diagram of the desulfurizing member 1012. As shown in Fig. 22(b), the desulfurizing member 1012 is configured, unlike the desulfurizing member 912, such that a desulfurizing member inlet 1021 is provided on an upper part of a container 913, and a desulfurizing member outlet 1022 is provided on a lower part of the container 913. A seal member 218 is provided in the desulfurizing member outlet 1022, and a seal member 1023 is provided in the desulfurizing member inlet 1021. However, the seal member 1023 is a detachable seal unlike the seal member 218.

As shown in Fig. 22(a), three of such desulfurizing members 1012 are connected to one another, so that a desulfurizing section 1020 is configured. Here, a desulfurizing member inlet 1021, from which the seal member 1023 is separated, acts as a projection, and breaks a seal member 218 of a desulfurizing member 1012 on an upper side thereof, thereby the three desulfurizing members 1012 are connected to one another. In the figure, a broken seal member 218 is shown as a seal portion 218a. When the inner container 1008 is inserted into an outer container, a projecting portion 217 in an outer-container outlet 204 breaks two seal members 218 of a seal member 218 in an inner-container outlet 212 and a seal member 218 on a desulfurizing member 1012 disposed on a lowermost side.

In the inner container 1008 having such a configuration, when only one desulfurizing member 1012 is replaced, a desulfurizing member 1012 for replacement is disposed on a most downstream side of the inner container 1008 after a seal member 1023 is separated from the desulfurizing member 1012. In this case, a desulfurizing agent 209 filled in the desulfurizing member 1012 for replacement may be prevented from being exposed to the atmosphere and thus degraded.

The separated seal member 1023 can be used for closing the desulfurizing member inlet 1021 of the desulfurizing member 1012 extracted from the inner container 1008. Moreover, a seal member 818 described in embodiment 2 is used in place of the seal member 218, thereby when the desulfurizing member 1012 is replaced, opening area of the desulfurizing member outlet 1022 may be reduced at least, and therefore bad odor may be reduced.

### (Embodiment 6)

Hereinafter, a configuration of a fuel cell generation system 100 of embodiment 6 according to the present disclosure is described.

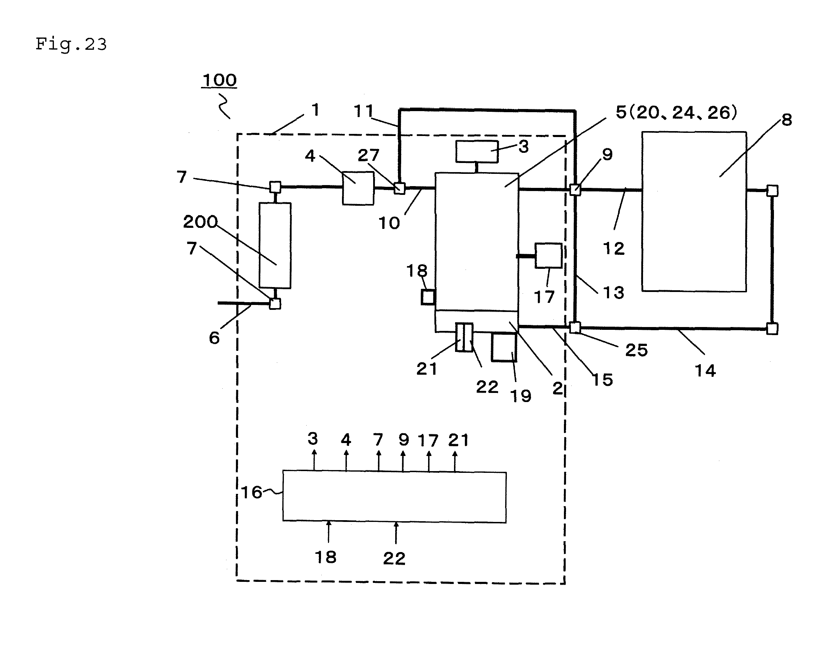

Fig. 23 is a schematic diagram showing the fuel cell generation system 100 of embodiment 6 of the present disclosure. As shown in Fig. 23, the fuel cell generation system 100 of embodiment 6 includes a hydrogen generator 1 that generates hydrogen-containing gas, a fuel cell 8 that uses the hydrogen-containing gas supplied from the hydrogen generator 1 to generate electricity, a hydrogen-containing-gas supply path 12 for supplying the hydrogen-containing gas from the hydrogen generator 1 to the fuel cell 8, an off-gas path 14 that guides a hydrogen off-gas emitted by the fuel cell 8 to the hydrogen generator 1, and a combustion-gas supply path 15 for supplying combustion gas to the hydrogen generator 1.

A closure section 9, which stops supply of the hydrogen-containing gas from the hydrogen generator 1, is provided in the hydrogen-containing-gas supply path 12. The closure section 9 is connected with a hydrogen generator bypass path 11 that guides material supplied from a material supply section 4 to the outside before introducing the material into a reformer 5, and a fuel cell bypass path 13 for returning the hydrogen-containing gas supplied from the hydrogen generator 1 to the hydrogen generator 1 rather than supplying the gas to the fuel cell 8. The fuel cell bypass path 13, the off-gas path 14, and the combustion-gas supply path 15 are connected to one another via a connection 25.

The closure section 9 is configured by combining a plurality of electromagnetic valves to one another (detailed description is omitted), and has a function of closing or opening the hydrogen-containing-gas supply path 12, and a function of switching gas flow such that gas supplied from the hydrogen generator 1 or gas supplied from the hydrogen generator bypass path 11 is flowed into the hydrogen-containing-gas supply path 12 or the fuel cell bypass path 13.

Since a typical polymer electrolyte fuel cell is used as the fuel cell 8 in embodiment 6, detailed description of the fuel cell is omitted.

Hereinafter, a specific description of the hydrogen generator 1 of embodiment 6 is described. As shown in Fig. 1, the hydrogen generator 1 of embodiment 6 includes a desulfurizer 200 that removes a sulfur component in material as described in embodiment 1, a water supply section 3, the material supply section 4, the reformer 5, and an operation controller 16.

The water supply section 3 is a water pump having a flow control function, which is externally connected to the reformer 5. The water supply section 3 supplies water to the reformer 5 while controlling flow of the water according to an instruction from the operation controller 16.

The material supply section 4 is a booster pump having a flow control function, which is disposed on a material supply path 10 connecting the desulfurizer 200 to the reformer 5. The material supply section 4 supplies material to the reformer 5 while controlling flow of the material according to an instruction from the operation controller 16. The hydrogen generator bypass path 11 is connected to the material supply path 10 on a downstream side of the material supply section 4 via a connection 27.

The desulfurizer 200 described in embodiment 1 is connected to a city-gas gas infrastructure line 6 as a material supply source. Material supplied from the gas infrastructure line 6 is controlled by the material supply section 4 so that amount of the material is corresponding to amount of the hydrogen-containing-gas necessary for the fuel cell 8, and supplied to the desulfurizer 200. In embodiment 6, the desulfurizer 200 is disposed between the gas infrastructure line 6 and the material supply section 4. However, this is not limiting, and the desulfurizer may be disposed on a downstream side of the material supply section 4.

A desulfurizer connection 7 is disposed on each of an upstream side (outer-container inlet 203 side) and a downstream side (outer-container outlet 204 side) of the desulfurizer 200. The desulfurizer connection 7 is configured to be detachable by using a screw joint or the like so that the desulfurizer 200 may be easily removed from piping such as the gas infrastructure line 6 during replacement/maintenance of the desulfurizer 200. The desulfurizer connection 7 may have a valve function of controlling flow of material, for example, may include an electromagnetic valve. In addition, only the inner container 208 may be replaced without removing the outer container 201 from the piping such as the gas infrastructure line 6 during the replacement/maintenance.

The reformer 5 has a steam reforming section 20 that induces a reforming reaction of material with steam to generate hydrogen-containing gas, a conversion section 24 that induces a conversion reaction of carbon monoxide in the hydrogen-containing gas generated by the steam reforming section 20 with steam so that carbon monoxide concentration is reduced, an air supply section 17 that supplies air to hydrogen-containing gas after passing through the conversion section 24, and a selective oxidation section 26 that uses air supplied from the air supply section 17 to remove carbon monoxide, which is left in the hydrogen-containing gas after passing through the conversion section 24, largely by oxidizing the carbon monoxide.

Furthermore, a reforming temperature detection section 18, which detects temperature of a reforming catalyst (or hydrogen-containing gas) in the steam reforming section 20, is provided in the reformer 5, and a heating section 2 is provided in a bottom of the reformer, which bums combustion gas for supplying heat of reaction necessary for the reforming reaction in the steam reforming section 20. The reformer 5 uses material after passing through the desulfurizer 200 and water supplied from the water supply section 3 to generate the hydrogen-containing gas.

In embodiment 6, an Ru-base reforming catalyst is provided in the steam reforming section 20, a Cu-Zn-base conversion catalyst is provided in the conversion section 24, and an Ru-base selective-oxidation catalyst is provided in the selective oxidation section 26. Since a configuration of each of the steam reforming section 20, the conversion section 24, and the selective oxidation section 26 is the same as a configuration in a typical reformer, detailed description of the configuration is omitted.

The heating section 2 has an igniter 21 being an ignition source of the heating section 2, a combustion detection section 22 including a flame rod detecting a combustion condition in the heating section 2, and a combustion fan 19 that supplies combustion air to the heating section 2. In embodiment 2, a burner is used as the heating section 2.

The operation controller 16 controls operation performance of hydrogen-containing gas of the hydrogen generator 1. That is, the operation controller 16 uses a semiconductor memory, CPU and the like so that the controller may dispose an operation performance sequence of the hydrogen generator 1, and operation information such as integrated material flow rate, calculate an appropriate operation condition depending on a situation, and instruct operation condition to the water supply section 3, the material supply section 4 or the like. For example, the operation controller 16 is inputted with a detection result of each of the reforming temperature detection section 18 and the combustion detection section 22, and controls a current pulse, power or the like to be inputted to each of the water supply section 3 and the material supply section 4 by using the detection result, thereby controls supply of material to be supplied from the material supply section 4 to the reformer 5, and controls supply of water to be supplied from the water supply section 3 to the reformer 5, and controls operation of the desulfurizer connection 7, the closure section 9, the air supply section 17, the igniter 21 and the like. Furthermore, the operation controller 16 controls operation performance of the fuel cell 8 (detailed description of the operation is omitted).

Since the fuel cell generation system 100 of embodiment 6 performs the same operation as a typical fuel cell generation system, detailed description of the operation is omitted.

While the desulfurizer 200 described in embodiment 1 is used in the above embodiment 6, any desulfurizer described in the above embodiments may be used.

### Industrial Applicability

The desulfurizer, the hydrogen generator using the desulfurizer, and the desulfurizing agent cartridge of the present disclosure have an advantage that a desulfurizing agent may be more easily replaced, and degradation of a desulfurizing agent may be suppressed during replacement, and therefore they are useful for a fuel cell generation system or the like.

## Claims

1. A desulfurizer comprising:
an outer container that is provided in a flow path of material, and has an outer-container inlet into which the material flows, and an outer-container outlet from which the material flows out, and
an inner container that has a desulfurizing section filled with a desulfurizing agent for removing an odor component in the material, and is removably disposed in the outer container,
wherein the inner container has
an inner-container inlet that is communicated to the outer-container inlet, and allows inflow of the material into the desulfurizing section,
an inner-container outlet that is communicated to the outer-container outlet, and allows outflow of the material from the desulfurizing section, and
partition portions provided in the inner-container inlet and the inner-container outlet respectively, and
when the inner container is disposed in the outer container, each of the partition portions is moved or deformed by an effect of each of the outer-container inlet and the outer-container outlet, so that communication is made between the outer-container inlet and the inner-container inlet, and between the inner-container outlet and the outer-container outlet.

2. The desulfurizer according to claim 1:
wherein the outer container has an abutment portion formed toward a side of the inner container in each of the outer-container inlet and the outer-container outlet, and
when the inner container is disposed in the outer container, each of the partition portions in the inner container is broken by the abutment portion in each of the outer-container inlet and the outer-container outlet.

3. The desulfurizer according to claim 2:
wherein groove-like incisions are formed in each of the partition portions.

4. The desulfurizer according to claim 3:
wherein each of the partition portions has elasticity, and
when the inner container is removed from the outer container, each of the partition portions deforms by elastic force thereof so as to close each of the inner-container inlet and the inner-container outlet.

5. The desulfurizer according to claim 4:
wherein a plurality of the incisions are formed from a center to a periphery of each of the partition portions,
each of the partition portions has a plurality of elastic portions being formed by breaking the partition portion along the incisions by the abutment portion,
when the inner container is disposed in the outer container, the plurality of elastic portions are opened to a side of the periphery by the abutment portion in each of the outer-container inlet and the outer-container outlet, and
when the inner container is removed from the outer container, the plurality of elastic portions return by elastic force thereof so as to close each of the inner-container inlet and the inner-container outlet.

6. The desulfurizer according to claim 1:
wherein the outer container has an abutment portion formed toward a side of the inner container in each of the outer-container inlet and the outer-container outlet,
each of the partition portions in the inner container has a plurality of elastic portions formed by a plurality of slit-like incisions provided from a center to a periphery,
when the inner container is disposed in the outer container, the plurality of elastic portions are opened to a side of the periphery by the abutment portion in each of the outer-container inlet and the outer-container outlet, and
when the inner container is removed from the outer container, the plurality of elastic portions return by elastic force thereof so as to close each of the inner-container inlet and the inner-container outlet.

7. The desulfurizer according to claim 2 or 6:
wherein the abutment portion has a cylindrical shape, and
an end on a side of the inner container of the abutment portion is formed obliquely or irregularly.

8. The desulfurizer according to claim 1:
wherein each of the partition portions in the inner container has
a wall having a through-hole formed therein,
a closure member that closes the through-hole, and
an elastic member that urges the closure member to the outside of the inner container so as to close the through-hole,
the outer-container inlet and the outer-container outlet have abutment portions respectively, each abutment portion being formed in a manner of being able to abut to the closure member,
when the inner container is disposed in the outer container, the abutment portion of each of the outer-container inlet and the outer-container outlet abuts to the closure member, thereby the closure member moves to the inside of the inner container, and
when the inner container is removed from the outer container, the abutment portion is separated from the closure member, and the closure member closes the through-hole by urging force of the elastic member.

9. The desulfurizer according to claim 1:
wherein the desulfurizing section has a plurality of desulfurizing members connected to one another.

10. The desulfurizer according to claim 1:
wherein the inner container is configured such that at least part of a wall thereof is formed of a transparent member.

11. The desulfurizer according to claim 1:
wherein the outer-container inlet is provided in an upper part of the outer container, the inner-container inlet is provided in an upper part of the inner container, and the outer-container inlet and the inner-container inlet are opposed to each other, and
the outer-container outlet is provided in a lower part of the outer container, the inner-container outlet is provided in a lower part of the inner container, and the outer-container outlet and the inner-container outlet are opposed to each other.

12. A hydrogen generator comprising:
the desulfurizer according to any one of claims 1 to 11, and
a reforming section that induces a reforming reaction of the material to generate hydrogen-containing gas.

13. A fuel cell generation system comprising:
the hydrogen generator according to claim 12, and
a fuel cell using the hydrogen-containing gas supplied from the hydrogen generator as fuel.

14. A desulfurizing agent cartridge, which has a desulfurizing section filled with a desulfurizing agent removing an odor component in material, and is removably disposed in an outer container provided in a flow path of the material, comprising:
an inner-container inlet that is communicated to an outer-container inlet, into which the material flows, of the outer container, and allows inflow of the material into the desulfurizing section,
an inner-container outlet that is communicated to the outer-container outlet, from which the material flows out the outer container, and allows outflow of the material from the desulfurizing section, and
partition portions provided in the inner-container inlet and the inner-container outlet respectively,
wherein when the inner container is disposed in the outer container, each of the partition portions is moved or deformed by an effect of each of the outer-container inlet and the outer-container outlet, so that communication is made between the outer-container inlet and the inner-container inlet, and between the inner-container outlet and the outer-container outlet.
